(19) Europäisches Patentamt
European Patent Office
Office européen des brevets

(11) **EP 3 471 333 A1**

(12) **EUROPEAN PATENT APPLICATION**

(43) Date of publication:
**17.04.2019 Bulletin 2019/16**

(51) Int Cl.:
**H04L 9/00** (2006.01)

(21) Application number: **17306376.9**

(22) Date of filing: **11.10.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **GEMALTO SA**
**92190 Meudon (FR)**

(72) Inventors:
• **JEMLI, Nejib**
**92190 Meudon (FR)**
• **WIES, Thomas**
**92190 Meudon (FR)**
• **GOUGET, Aline**
**92190 Meudon (FR)**

(74) Representative: **Cassagne, Philippe M.J. et al**
**Gemalto SA**
**Intellectual Property Department**
**6, rue de la Verrerie**
**92197 Meudon Cedex (FR)**

(54) **A METHOD FOR A COMMUNICATION DEVICE TO RETRIEVE A PLAINTEXT FROM A CIPHERTEXT MEMORIZED IN A REMOTE DATABASE**

(57) This invention relates to a method for a first communication device (100) to retrieve a plaintext P from a first ciphertext C memorized in a first server called remote database (102), the first ciphertext C being generated by a second communication device (101) by applying a first encryption function E() in order to perform an homomorphic encryption of plaintext P by combining it with a first encryption key eHE provisioned in said second communication device. The method comprises the following steps carried out by the first communication device (100): receiving (200) from the remote database (102) the first ciphertext C; generating (201) a second ciphertext C' by applying a second encryption function F() that combines a single-use encryption key K generated by a random number generator with the first ciphertext C; transmitting (202) the second ciphertext C' to a second remote server (103) provisioned with a first decryption key dHE corresponding to the first encryption key eHE; receiving (203) from the second remote server (103) a third ciphertext M generated by applying a first decryption function D() corresponding to the first encryption function E() in order to combine the second ciphertext C' with the first decryption key dHE; retrieving (204) the plaintext P by applying a second decryption function G() corresponding to the second encryption function F() in order to combine the single-use encryption key K1 with the third ciphertext M.

**Fig. 1**

**Description**

TECHNICAL FIELD

The present invention relates to a method for a communication device to retrieve a plaintext from a ciphertext memorized in a remote database. It is applicable to cloud homomorphic encryption for cloud computing.

BACKGROUND OF THE INVENTION

Cloud computing generally refers to a network infrastructure allowing access to shared resources such as storage and applications. Cloud computing enables a local device, for example a personal computer connected to the internet, to access remotely to these shared resources. A user can therefore store its private data in one or several remote servers of the network infrastructure and/or benefit from an application software that is executed in the cloud and not in its local device.

Data privacy and confidentiality is a potential issue when using a cloud based solutions. As private data is memorized and/or processed remotely, sometimes by using resources that are managed by a third party, users and companies ask for solutions for keeping their data safe.

According to the Recommendation ITU-T Y.2060 provided by the International Telecommunication institute, the Internet of Things is defined as a global infrastructure for the information society, enabling advanced services by interconnecting physical and virtual things based on existing and evolving interoperable information and communication technologies. A thing is an object of the physical world (physical things) or the information world (virtual things), which is capable of being identified and integrated into communication networks. At present, IoT is generally applied in fields such as security surveillance, automatic vending machines, public traffic systems, vehicle monitoring and management, industry process automatization, motor machineries, city informationalization.

Data privacy and confidentiality is a particularly sensible problem in the context of the Internet of Things (IoT) and more generally in the context of cloud computing where multiple communication devices are reporting data in the cloud.

SUMMARY OF THE INVENTION

This invention relates to a method for a first communication device to retrieve a plaintext P from a first ciphertext C memorized in a first server called remote database, the first ciphertext C being generated by a second communication device by applying a first encryption function E() in order to perform an homomorphic encryption of plaintext P by combining it with a first encryption key eHE provisioned in said second communication device. The method comprising the following steps carried out by the first communication device:

- receiving from the remote database the first ciphertext C;
- generating a second ciphertext C' by applying a second encryption function F() that combines a single-use encryption key K generated by a random number generator with the first ciphertext C;
- transmitting (202) the second ciphertext C' to a second remote server provisioned with a first decryption key dHE corresponding to the first encryption key eHE;
- receiving from the second remote server a third ciphertext M generated by applying a first decryption function D() corresponding to the first encryption function E() in order to combine the second ciphertext C' with the first decryption key dHE;
- retrieving the plaintext P by applying a second decryption function G() corresponding to the second encryption function F() in order to combine the single-use encryption key K1 with the third ciphertext M.

According to an example, the method comprises the step of sending a request message to the remote database for receiving at least a ciphertext memorized in said remote database.

According to an example, the request message is transmitted with an identifier of the second communication device in order to get a ciphertext C provided by this device.

According to an example, the encryption key eHE is associated to the second communication device so that no other device capable of accessing the remote database is provisioned with the same encryption key.

According to an example, the encryption function E(), the decryption function D(), the encryption key eHE and the decryption key dHE are chosen for implementing a symmetric key encryption.

According to an example, the encryption function E(), the decryption function D(), the encryption key eHE and the decryption key dHE are chosen for implementing a asymmetric key encryption.

According to an example, the third ciphertext M is received from the second remote server via the remote database which monitors the application of the decryption function D() on ciphertext C'.

According to an example, an additional encryption channel is set up for securing data exchanged between the first communication device and the second remote server via the remote database.

According to an example, the encryption function F() is an affine function and the encryption *key K* is composed of two parts *K*1 and *K2*.

The invention also relates to a first communication device configured to retrieve a plaintext P from a first ciphertext C memorized in a remote database, the first ciphertext C being generated by a second communication device by applying a first encryption function E() in order to perform an homomorphic encryption of plaintext P by combining it with a first encryption key eHE provisioned in said second communication device. The first communication device is further configured to:

- receive from the remote database the first ciphertext C;
- generate a second ciphertext C' by applying a second encryption function F() that combines a single-use encryption key K generated by a random number generator with the first ciphertext C;
- transmit the second ciphertext C' to a second remote server provisioned with a first decryption key dHE corresponding to the first encryption key eHE;
- receive from the second remote server a third ciphertext M generated by applying a first decryption function D() corresponding to the first encryption function E() in order to combine the second ciphertext C' with the first decryption key dHE;
- retrieve the plaintext P by applying a second decryption function G() corresponding to the second encryption function F() in order to combine the single-use encryption key K1 with the third ciphertext M.

According to an example, the first communication device comprises a secure enclave configured to be provisioned with the encryption key eHE and for applying the encryption function F() and the decryption function G().

According to an example, the first communication device comprises the random number generator used for generating the single-use encryption key K.

This invention also relates to a computer program product comprising instructions which, when the program is executed by a computer, cause the computer to carry out the steps of the method described above.

This invention also relates to a computer-readable storage medium comprising instructions which, when executed by a computer, cause the computer to carry out the steps of the method described above.

The invention also relates to a data processing system comprising means for carrying out the steps of the method described above.

BRIEF DESCRIPTION OF THE DRAWINGS

Additional features and advantages of the invention will be more clearly understandable after reading a detailed description of one preferred embodiment of the invention, given as an indicative and non-limitative example, in conjunction with the following drawings:

- Figure 1 illustrates schematically a system allowing to securely store and manage data in a cloud based system;
- Figure 2 is an example of flow chart comprising several steps applied by a communication device for a user to retrieve data memorized enciphered in a remote database;
- Figure 3 provides an example wherein the monitoring of the remote server in charge of applying homomorphic decryption function is delegated to the remote database in charge of memorizing enciphered data.

DETAILED DESCRIPTION

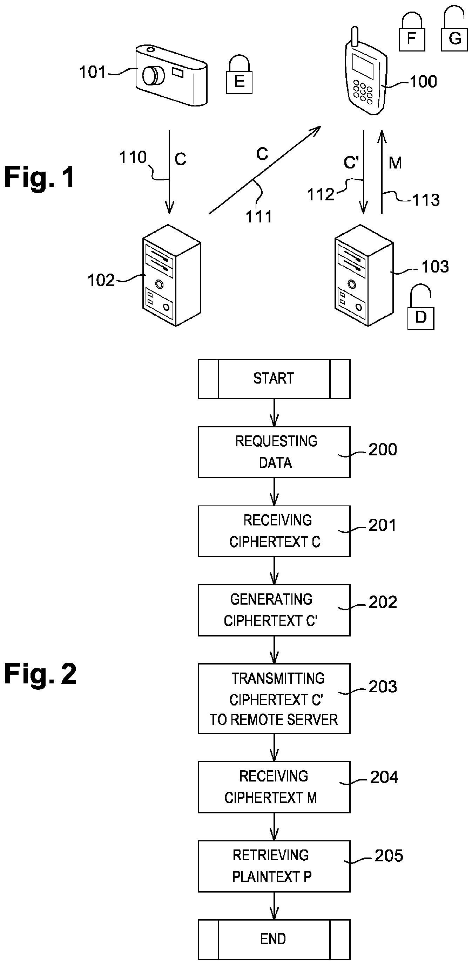

**Figure 1** illustrates schematically a system allowing to securely store and manage data in a cloud based system.

According to this example, a first communication device 100 is used to retrieve data stored on a remote database 102.

In this description, the expression "communication device" refers to a piece of equipment with communication capabilities and when needed, capacity of data capture, sensing, data storage, sensing and/or data processing.

The first communication device 100 can be a portable device such as a smartphone, a tablet computer, a laptop computer or a wearable device such as a smartwatch.

The remote database 102 is for example implemented in a remote server. It stores one or several data items retrievable by the first communication device 100. These data items are stored enciphered C so that the operator of the database has no access to the information carried by the data items. Said differently, the remote dataset memorizes data items in the form of ciphertexts. A ciphertext designates the result obtained by applying a cipher algorithm on a plaintext. A plaintext refers to an unencrypted information.

The plaintext P is made available to a second communication device 101, which is for example an IoT device comprising a wireless communication module also called Machine Type Communication (MTC) module allowing to exchange data with remote network resources using UMTS/HSDPA, CDMA/EVDO, LTE, 5G, LoRa or other communication technologies. The plaintext P correspond for example to a piece of data captured by a sensor embedded in the second communication device 101.

In this specification, the invention is mainly described in the context of IoT, but this is for exemplary purpose only. The skilled person will understand that the invention can be applied to any system for which there is a need to store data securely in the cloud as well as providing a secure access for allowed users.

The ciphertext C is generated by the second communication device 101 from plaintext P by applying a encryption function E and is transmitted 110 by the second communication device 101 to the remote database 102. The encryption function E applied by the second communication device 101 and its corresponding decryption function D applied by a second remote server 103 implement an homomorphic cryptosystem.

In order to retrieve the plaintext, the first communication device 100 can request and receive 111 the ciphertext C from the remote database 102 and request a second remote server 103 to apply a decryption function D corresponding to the encryption function E. The skilled person will understand that for adding security to the system, the user of the first communication device can be authenticated using state-of-the-art technologies.

An important aspect of the invention is that the first communication device 100 is configured to add a second encryption layer to the ciphertext C obtained from the remote database 102 before requiring the second remote server 103 to apply its decryption function. The application of this second encryption layer is made possible by the use of the aforementioned homomorphic cryptosystem.

Therefore, the first communication device 100 applies an encryption function in order to obtain a second ciphertext C' from the first ciphertext C. Then the second ciphertext C' is transmitted 112 to the remote server 103. A decryption function D corresponding to the encryption function E is applied to the second ciphertext C' in order to get a third ciphertext M which is then returned 113 to the first communication device 100. The first communication device is then able to recover the plaintext P from the third ciphertext M by applying a decryption function G corresponding to the encryption function F. Advantageously and thanks to the second encryption layer applied by the first communication device 100, the remote server 103 will have no access to the plaintext P. The remote database 102 knows only ciphertext C and the remote server 103 knows only ciphertexts C' and M which means that none of the remote servers is able to access to the information contained in plaintext P.

**Figure 2** is an example of flow chart comprising several steps applied by a communication device for a user to retrieve data memorized enciphered in a remote database.

This flow chart describes a method which can be implemented by the first communication device 100. When it is needed, the first communication device 100 can request data 200 to the remote database 102.

In order to identify the requested data, the request message can be transmitted together with one or several identifiers.

As an example, an identifier can be used to identify the second communication device 101. In that case, ciphered data is transmitted by the second communication device 101 to the remote database 102 together with an identifier of the second communication device 101.

According to another example, ciphered data is transmitted by the second communication device 101 to the remote database 102 together with an identifier of a user or a set of users to which it is addressed.

According to another example, ciphered data is transmitted by the second communication device 101 to the remote database 102 together with an identifier of the data or data type. For example, a random identifier can be generated at the time of transmitting the data and used as an identifier.

The identifier is for example memorized without being ciphered by the remote database 102 together with the ciphered data.

According to an aspect of the invention, the identifier is not transmitted to the remote server 103. It is therefore unable to identify or locate the source of data received for being processed. This is made possible by separating said identifier from data ciphered by the second communication device 101. The identifier can be ciphered, but if it is the case this has to be done separately from the encryption of plaintext P.

In addition or alternatively, the ciphered data can be memorized together with metadata such as the time and data at which it has been generated by the second communication device 101 and/or received by the remote database. These identifiers and metadata which are memorized together with the ciphered data allow a user of the first communication device 100 to target some specific data item when sending its request message to the remote database 102. For example, the request message can be transmitted with an identifier of an IoT device such as a connected weather station and with a date such that all the measurements reported by this weather station that day are transmitted to the first communication device 100.

According to other embodiments, the ciphered data memorized in the remote database 102 can be transmitted to the first communication device 100 periodically, when specific conditions are met or when a given event is detected.

The remote database 102 is adapted to memorize a plurality of ciphertexts transmitted by a plurality of second communication devices 101. The second communication device 101 is the entity which carries out the encryption of the data to be transmitted to the remote database.

Data collected or generated by the second communication device 101 is designated as plaintext P and ciphered data obtained from plaintext P is designated as ciphertext C. The following expression can be used to describe the encryption operation:

$$C = E(P, eHE)$$

According to an important aspect of the invention, function $E(\ )$ is adapted to implement an homomorphic encryption by combining plaintext P with an encryption key *eHE*. According to an embodiment, the encryption key *eHE* is associated to the second communication device, which means that no other device in the system share the same encryption key.

Alternatively, the same encryption key can be shared by a plurality of communication devices owned by the same owner.

The encryption key is for example provisioned in a secure memory of the second communication device 101 at the manufacturing stage or using secure over-the-air (OTA) technologies. This secure memory is useful in particular in the case of symmetric encryption when *eHE* needs to be kept secret.

The aforementioned secure memory can be implemented in a secure enclave embedded in the first communication device. This secure enclave can also be configured to implement the encryption and decryption functions performed by the first communication device 100, including the application of encryption function F() and decryption function G().

In this description, a secure enclave refers to a secure area that is adapted to store data and to protect their integrity and confidentiality and comprising a set of at least one hardware and/or software components. This secure enclave can be implemented for example into a processor in the form of a Trusted Execution Environment (TEE) or as a secure element embedded in a system or integrated in a System-on-Chip (SoC).

The aim of the first communication device 100 is to retrieve plaintext P from ciphertext C to extract the corresponding information and/or apply a processing on it. Once ciphertext C is received 201 by the first communication device 100, a second encryption layer is added 202. The expression second encryption layer is used to underline the fact that after applying an homomorphic encryption to obtain a first ciphertext C, a second encryption function is used by the first communication device 100 to generate a second ciphertext C'. The decryption function $D(\ )$ corresponding to the homomorphic encryption function $E(\ )$ is not applied by the first communication device 100, but by the remote server 103. The aim of adding a second encryption layer will allow the remote server 103 to apply the decryption operation $D(\ )$ while keeping plaintext P secret.

The application of the second encryption layer can be expressed as follow:

$$C' = F(C, K)$$

K refers to the encryption key used by the first communication device 100, and $F(\ )$ refers to the encryption function implementing the second encryption layer and which combines *K* with *C* in order to generate *C'*.

According to an aspect of the invention, the encryption *key K* is a single use encryption key. It is generated by a random number generator (RNG). This random number generator can be implemented in the first communication device 100. This means that for each ciphertext received from the remote database 102, a different encryption key is applied. This advantageously protect the security scheme against eavesdropping that may occur on the communication interfaces between the first communication device 100 and the remote server 103.

The second ciphertext *C'* is then transmitted 203 to the remote server 103. The remote server 103 is provisioned with a decryption key *dHE* corresponding to the encryption key *eHE* used to generate *C*. The remote server 103 applies the encryption function corresponding to the homomorphic encryption function $E(\ )$ by combining *C'* and *dHE*. The obtained result is a third ciphertext *M* and this process can be expressed as follow:

$$M = D(C', dHE)$$

The ciphertext *M* is then sent by the remote server 103 and received 204 by the first communication device 100. In order to retrieve plaintext $P$, the first communication device 100 applies a decryption function $G(\ )$ corresponding to the encryption function $F(\ )$ by combining $M$ with the single use encryption key $K$. This can be expressed as follow:

$$P = G(M, K)$$

Advantageously, the first 101 and second 102 communication devices are the only entities to have access to plaintext P.

The described encryption and decryption operations are part of an homomorphic cryptosystem. Prior art algorithms can be used to implement this cryptosystem, for example Benaloh, DGHV (van Dijk, Gentry, Halevi and Vaikuntanathan), Paillier, BGV (Brakerski, Gentry and Vaikuntanathan), Goldwasser-Micali or ElGamal. This list is not limitative and is provided for exemplary purpose only.

According to an embodiment, it is to be noted that the single use encryption key $K$ can be composed of two parts $K1$ and $K2$ in order to implement an affine function as follow:

$$C' = F(C, K) = F(C, K1, K2) = C \times K1 + K2$$

According to another embodiment, the single use encryption key $K$ can be composed of two parts $K1$ and $K2$ in order to implement an affine function taking into account a modulus function $mod(\ )$ as follow:

$$C' = F(C, K) = F(C, K1, K2) = mod(C \times K1 + K2, N)$$

where N is a constant value.

According to another embodiment, the single use encryption key $K$ can be composed of a single parts $K1$ in order to implement an affine function taking into account a modulus function $mod(\ )$ as follow:

$$C' = F(C, K) = F(C, K1) = mod(C \times K1, N)$$

Advantageously, using an affine function improves security as if an observer knows $C$ and $C'$, he will hardly be capable of determining $K1$ and $K2$.

According to an embodiment, the encryption keys $dHE$ and $eHE$ can be chosen for implementing a symmetric key encryption or and asymmetric key encryption. In case of a symmetric key encryption, $dHE$ and $eHE$ are the same and should be kept secret. In the case of an asymmetric encryption, a well-known public key encryption technology can be implemented.

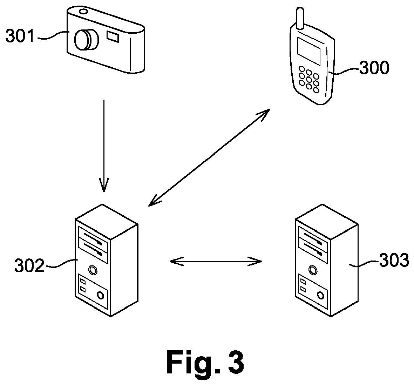

**Figure 3** provides an example wherein the monitoring of the remote server in charge of applying homomorphic decryption function is delegated to the remote database in charge of memorizing enciphered data.

According to this example, the first communication device 300 exchange data with the remote server 303 through the remote data base 302. The method as described with Figure 2 is almost unchanged. The only difference is in step 203 which is slightly modified as ciphertext C' is transmitted by the first communication 300 to the remote database 302. The remote database then transmit $C'$ to the remote server 303 which generate ciphertext $M$ from $C'$ and returns it back to the remote database 302. Then, ciphertext $M$ is transmitted to the first communication device 300 which is able to retrieve plaintext P as it knows the encryption key $K$. In this embodiment, the first communication device 301 providing ciphertext C and the second communication device 302 communication devices are still the only entities to have access to plaintext P, as the remote database 302 and the remote server 303 do not know the single use cipher key $K$.

In order to improve the security of the system and void the remote database to be able to know ciphertext $M$, an additional encryption layer allowing to implement a security channel can be set up for securing data exchanged between the first communication device (300) and the remote server (303) via the remote database (302). The skilled person will appreciate that well known encryption technics can be used for that purpose.

## Claims

1. A method for a first communication device (100) to retrieve a plaintext P from a first ciphertext C memorized in a first server called remote database (102), the first ciphertext C being generated by a second communication device (101) by applying a first encryption function E() in order to perform an homomorphic encryption of plaintext P by combining it with a first encryption key eHE provisioned in said second communication device, the method comprising the following steps carried out by the first communication device (100):

- receiving (200) from the remote database (102) the first ciphertext C;
- generating (201) a second ciphertext C' by applying a second encryption function F() that combines a single-use encryption key K generated by a random number generator with the first ciphertext C;
- transmitting (202) the second ciphertext C' to a second remote server (103) provisioned with a first decryption key dHE corresponding to the first encryption key eHE;
- receiving (203) from the second remote server (103) a third ciphertext M generated by applying a first decryption function D() corresponding to the first encryption function E() in order to combine the second ciphertext C' with the first decryption key dHE;
- retrieving (204) the plaintext P by applying a second decryption function G() corresponding to the second encryption function F() in order to combine the single-use encryption key K1 with the third ciphertext M.

2. A method according to claim 1, comprising the step of sending a request message (200) to the remote database (102) for receiving (200) at least a ciphertext memorized in said remote database (102).

3. A method according to claim 2, wherein the request message is transmitted with an identifier of the second communication device (101) in order to get a ciphertext C provided by this device.

4. A method according to any of the preceding claims, wherein the encryption key eHE is associated to the second communication device (101) so that no other device capable of accessing the remote database (102) is provisioned with the same encryption key.

5. The method according to any of the preceding claims, wherein the encryption function E(), the decryption function D(), the encryption key eHE and the decryption key dHE are chosen for implementing a symmetric key encryption.

6. The method according to any of claims 1 to 4, wherein the encryption function E(), the decryption function D(), the encryption key eHE and the decryption key dHE are chosen for implementing a asymmetric key encryption.

7. The method according to any of the preceding claims, wherein the third ciphertext M is received from the second remote server (303) via the remote database (302) which monitors the application of the decryption function D() on ciphertext C'.

8. The method according to claim 7 wherein an additional encryption channel is set up for securing data exchanged between the first communication device (300) and the second remote server (303) via the remote database (302).

9. The method according to any of the preceding claims, wherein the encryption function F() is an affine function and the encryption *key K* is composed of two parts *K*1 and *K*2.

10. A first communication device (100) configured to retrieve a plaintext P from a first ciphertext C memorized in a remote database (102), the first ciphertext C being generated by a second communication device (101) by applying a first encryption function E() in order to perform an homomorphic encryption of plaintext P by combining it with a first encryption key eHE provisioned in said second communication device, the first communication device (100) being further configured to:

- receive from the remote database (102) the first ciphertext C;
- generate a second ciphertext C' by applying a second encryption function F() that combines a single-use encryption key K generated by a random number generator with the first ciphertext C;
- transmit the second ciphertext C' to a second remote server (103) provisioned with a first decryption key dHE corresponding to the first encryption key eHE;
- receive from the second remote server (103) a third ciphertext M generated by applying a first decryption function D() corresponding to the first encryption function E() in order to combine the second ciphertext C' with the first decryption key dHE;
- retrieve (204) the plaintext P by applying a second decryption function G() corresponding to the second encryption function F() in order to combine the single-use encryption key K1 with the third ciphertext M.

**11.** The first communication device (100) according to claim 10, comprising a secure enclave configured to be provisioned with the encryption key eHE and for applying the encryption function F(à and the decryption function G().

**12.** The first communication device (100) according to claim 10 or 11 comprising the random number generator used for generating the single-use encryption key K.

**13.** A computer program product comprising instructions which, when the program is executed by a computer, cause the computer to carry out the steps of the method of any of claims 1 to 9.

**14.** A computer-readable storage medium comprising instructions which, when executed by a computer, cause the computer to carry out the steps of the method of any of claims 1 to 9.

**15.** A data processing system comprising means for carrying out the steps of the method according to any of claims 1 to 9.

**Fig. 1**

**Fig. 2**

START

REQUESTING DATA — 200

RECEIVING CIPHERTEXT C — 201

GENERATING CIPHERTEXT C' — 202

TRANSMITTING CIPHERTEXT C' TO REMOTE SERVER — 203

RECEIVING CIPHERTEXT M — 204

RETRIEVING PLAINTEXT P — 205

END

**Fig. 3**

Europäisches Patentamt

European Patent Office

Office européen des brevets

# EUROPEAN SEARCH REPORT

Application Number

EP 17 30 6376

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | KAIBIN HUANG ET AL: "A commutative encryption scheme based on ElGamal encryption", INFORMATION SECURITY AND INTELLIGENCE CONTROL (ISIC), 2012 INTERNATIONAL CONFERENCE ON, IEEE, 14 August 2012 (2012-08-14), pages 156-159, XP032325691, DOI: 10.1109/ISIC.2012.6449730 ISBN: 978-1-4673-2587-5 * the whole document * | 1-15 | INV. H04L9/00 |
| Y | US 2017/201371 A1 (YAGISAWA MASAHIRO [JP]) 13 July 2017 (2017-07-13) * abstract * * paragraphs [0002] - [0009] * * paragraphs [0043] - [0051] * | 1-15 | |
| A | SAIED HOSSEINI KHAYAT: "Using Commutative Encryption to Share a Secret", INTERNATIONAL ASSOCIATION FOR CRYPTOLOGIC RESEARCH,, vol. 20080818:184648, 18 August 2008 (2008-08-18), pages 1-6, XP061002952, [retrieved on 2008-08-18] * abstract * * Chapter 1: "Introduction" * * Chapter 3: "Proposed Scheme" * | 1-15 | TECHNICAL FIELDS SEARCHED (IPC) H04L |
| A | US 2013/111205 A1 (BISWAS DEBMALYA [CH]) 2 May 2013 (2013-05-02) * abstract * * paragraphs [0005] - [0008] * | 1-15 | |
| A | US 2006/282901 A1 (LI YI Q [US] ET AL) 14 December 2006 (2006-12-14) * abstract * * paragraphs [0015] - [0018] * | 1-15 | |

The present search report has been drawn up for all claims

| Place of search | Date of completion of the search | Examiner |
|---|---|---|
| Munich | 6 February 2018 | Di Felice, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 30 6376

This annex lists the patent family members relating to the patent documents cited in the above-mentioned European search report.
The members are as contained in the European Patent Office EDP file on
The European Patent Office is in no way liable for these particulars which are merely given for the purpose of information.

06-02-2018

| Patent document cited in search report | | Publication date | Patent family member(s) | | Publication date |
|---|---|---|---|---|---|
| US 2017201371 | A1 | 13-07-2017 | EP 3190741 A1 | | 12-07-2017 |
| | | | US 2017201371 A1 | | 13-07-2017 |
| US 2013111205 | A1 | 02-05-2013 | CN 104025498 A | | 03-09-2014 |
| | | | EP 2774312 A1 | | 10-09-2014 |
| | | | US 2013111205 A1 | | 02-05-2013 |
| | | | WO 2013064723 A1 | | 10-05-2013 |
| US 2006282901 | A1 | 14-12-2006 | US 2006282901 A1 | | 14-12-2006 |
| | | | WO 2006137970 A1 | | 28-12-2006 |

EPO FORM P0459

For more details about this annex : see Official Journal of the European Patent Office, No. 12/82